# EUROPEAN PATENT SPECIFICATION

(11) **EP 0 417 279 B1**
(45) Date of publication and mention of the grant of the patent: **08.06.1994**
(21) Application number: 89902807.0
(22) Date of filing: 22.02.1989
(51) Int. Cl.: C01B 3/08

(54) **PROCESS FOR PRODUCING HYDROGEN GAS**
VERFAHREN ZUR HERSTELLUNG VON WASSERSTOFFGAS
PROCEDE DE PRODUCTION D'HYDROGENE A L'ETAT GAZEUX

(43) Date of publication of application: 20.03.1991
(73) Proprietor: KIMOTO, Kenji, Yamaguchi-ken 751 (JP)
(72) Inventor: KIMOTO, Kenji, Yamaguchi-ken 751 (JP)
(74) Representative: Hansen, Bernd, Dr. Dipl.-Chem.
(86) International application number: JP8900175
(87) International publication number: WO9009956

(56) References cited:
- JP-A- 4 939 501
- US-A- 2 721 789
- GMELINS HANDBUCH DER ANORGAN CHEMIE ,Bd. "ALIMINIUM",Teil A, 8th Ed. ,pages 408-413, (1953)
- CHEMICAL ABSTRACTS,vol.111,no14,2October1989,Columbus,Ohio,US,abstract no 117733T page 147; & JP-A-01061301 08.03.1989

## Description

### Technical Field

The present invention relates to a method which can easily produce hydrogen gas without requiring any special equipment.

### Background Art

The recent energy situation can not but depend mainly on petroleum and coal resources for heat energy. Both petroleum and coal have given rise to air pollution problems caused by exhaust gas generated when they are burned. It has been already understood that, in order to solve problems of the spread of such air pollution caused by exhaust gas, employment of hydrogen gas as clean energy is urgently desired to be exploited and developed.

Customary and existing methods of producing hydrogen gas make use of heat or electric energy as in water electrolysis. However, a general and governing opinion in reference to these methods is that they require too high a cost to be practically adopted by industrial groups in general, and therefore the generalization of such methods has taken much time. Moreover, in the conventional methods, the obtained hydrogen gas is supplied by being previously filled in a pressure-proofed cylinder (bomb). Such cylinders are heavy and require taking due preventive measures against gas explosion when stored. Thus, the conventional methods have problems which need to be solved.

US-A-2 721 789 refers to a method for the generation of hydrogen gas, according to which aluminum and caustic soda are added to water.

From Gmelins Handbuch der anorganischen Chemie, Volume "Aluminium", Part A, Pages 408-413 (953), it is known that hydrogen gas is generated by the reaction of aluminum with the aqueous solution of an alkali substance (potassium hydroxide).

The purpose of the present invention is to solve the above-mentioned problems and to present a method of readily producing hydrogen gas in a sufficient production rate merely by adding water to a mixture, the method enabling easy storage of mixtures for producing hydrogen gas.

### Disclosure of the Invention

The method of producing hydrogen gas by this invention is characterized in that burnt dolomite, aluminum, and water are mixed together and allowed to react to form hydrogen gas.

Burnt dolomite as referred to herein is a calcined dolomite ore. The burning temperature of the dolomite ore is not particularly critical, but is preferably a temperature more than 800 °C, and most preferably a temperature of approximately 1200 °C.

Burnt dolomite is used in fragments of suitable sizes. If a large quantity of hydrogen gas is desired in a short time, minute particles of dolomite, namely, powdered dolomite, are preferably used, and in the contrary case, coarse particles of dolomite, namely, more than 1 mm in diameter, are preferably used. Preferably, dolomite particles are approximately 5 »m in diameter.

As aluminum, metal aluminum avilable on the market may be usually used. The purity of the aluminum is not particularly restricted, but nearly 100 % purified aluminum is weak in its reaction, and therefore 90 % to 98 % purified aluminum may be preferably used. Less purified aluminum can be used according to different purposes.

Aluminum may be used in suitable sizes similar to that of the burnt dolomite. Usually, aluminum powder and aluminum foil cut in suitable sizes can be generally used. Piece-cut aluminum and granulated aluminum can be respectively used according to verious purposes.

In this invention, hydrogen gas is produced by addition of aluminum to burnt dolomite dissolved in water. Hydrogen gas is also produced by addition of water into a mixture of burnt dolomite and aluminum.

The present invention, as is stated above, enables hydrogen gas to be generated naturally merely by mixing burnt dolomite with water, adding aluminum thereto and stirring slowly the mixture. Since hydrogen gas is produced by pouring water into a mixture of burnt dolomite and aluminum, the resultant mixture may be duly considered as hydrogen gas-stored alloy in a sense. What remarkably differs from existing gas-stored alloy is that this hydrogen gas-stored alloy can produce hydrogen gas only by the addition of water, which saves troublesome procedures of storing hydrogen gas without requiring any special equipment. Accordingly, equipment cost can be greatly reduced.

When the aluminum is completely used, the generation of gas will cease. In order to quicken chemical reaction as well as to raise a more effective proceeding rate of reaction, metal powders which are easy to oxidize and which are powerful in their capabiity of removing oxygen, shall be added. The fact mentioned above is due to the reaction of exciting energy. Metals having strong capability of removing oxygen include, for example, sodium, potassium. These metals may be used in the form of hydroxide, etc.

The residues made after chemical reaction stops, as dried after removal of water, may be turned into substances such as ceramics and far-infrared materials which are superior to any other substance ever known.

Burnt dolomite and aluminium will not react when water does not exist. Therefore, it is especially advantageous that if both are supplied in states of being broken into suitable sizes and mixed and being packed in a water-proof manner, hydrogen gas can be produced only by pouring water into the mixture in suitable hydrogen production equipment. Water used in the present invention may be city water or any other type of water.

The explanation of examples of the present invention is given as below. The present invention is, however, not limited thereto.

### EXAMPLE 1

A hole of about 2 mm was made in the center of the lid of a cylindrical tin container with a capacity of 700 cc (a Japanese tin can). Aluminum foil (for home use, 25 cm wide x 25 cm long) cut in tiny pieces was put into a well-stirred slurry solution of 200 cc burnt dolomite powder and 200 cc water in the container, and then the lid was fixed thereon after sufficiently mixing the resulting solution of aluminum foil, dolomite and water.

There arose a chemical reaction after three or four seconds, and hydrogen gas began evolving. After a moment, hydrogen gas began to come through the hole of the lid, when a fire was made on the tip of a small stick and brought near to the hole, where the lid was blown up off with a big sound. As drops of water were found on the lid, the conclusion was made that there was hydrogen gas produced. The same reaction lasted for approximately 30 seconds, during which time hydrogen gas was duly produced.

### EXAMPLE 2

The following materials are prepared:
(1) A 500 ml glass container (a conical flask) was attached with a rubber stopper. Two holes were made in the rubber stopper. A thermometer is to be inserted into one of the holes, and a glass pipe for gathering gas is to be inserted into the other hole. Here sufficient care is taken so that gas should not leak out through the holes or through the rubber stopper. A rubber tube to be inserted onto the tip end of the glass pipe is arranged to be about 50 cm long.
(2) 50 g of finely mixed burnt dolomite powder and 10 g of aluminum powder is to be put in a heat-resisting canvas bag. The mouth of the canvas bag is closed. As the aluminum, atomized aluminium powder is used.
(3) Gas gathering glass container.
(4) 200 ml of water.

200 ml of water (item (4)-city water was employed in this example) was poured into a gas gathering glass container (item (1)), into which the bag referred to as item (2) was placed with minimum air left in it. After the above procedures are performed, the rubber stopper referred to as item (1) was fixed onto the glass container. After about 20 seconds, there arose chemical reaction, and hydrogen gas began to come forth. After about 3 minutes passed, the reaction grew stronger, and more hydrogen gas was produced accordingly. Produced hydrogen gas was gathered into the gas gathering container referred to as item (3) by inserting the tip of the rubber tube referred to in item (1) into the gas gathering container. The reaction lasted for about 10 minutes with gradual subsidence, and after 30 minutes the reaction ceased. Hydrogen gas gathered during the production of hydrogen gas was 8 liters in quantity. The concentration of hydrogen gas gathered then was 98 % to 98.5 %. The highest heat recorded in this reaction was nearly 90 °C.

### EXAMPLE 3

It is well presumed that there is aluminate contained in the residues left after the cease of the hydrogen gas producing reaction. Aluminate can be obtained by high-speed centrifugal machine (15000 rpm). Since all the residues left after the cease of the hydrogen gas producing reaction are heat-resistant materials, they can be employed as high temperature heat-resistant material in desired forms directly after being dried or burnt at still higher temperatures. These residues also have great value for use as oxides.

As seen from the above, when the residues are produced as heat-resistant materials, the hydrogen gas is produced as a by-product, so that it becomes possible to reduce the cost of hydrogen gas production, and to fully compete with any other type of energy in price.

Chemical reaction schemes of the generation of hydrogen gas in this invention are shown below for reference.

2Al + 2Ca(OH)₂ + H₂O → Ca₂Al₂O₅ + 3H₂

2Al + 2Mg (OH)₂ + H₂O → Mg₂Al₂O₅ + 3H₂O

### EXAMPLE 4

Burnt dolomite powder (200 mesh in particle size) and aluminum powder (200 mesh in particle size) as atomized, each in the quantity of 500 g, were mixed and hermetically kept in a high density polyethylene bag at room temperature for three to six months. Then, after the pass of three to six months, this mixture was taken out of the referred bag and put it into a hydrogen gas gathering container, in which water was poured. The generation of hydrogen gas was recognized. The quantity of hydrogen gas generated at this time is the same as that generated before it was kept in the referred polyethylene bag.

## Claims

1. A method of producing hydrogen gas characterized in that burnt dolomite, aluminum and water are mixed.

2. A method of producing hydrogen gas as claimed in claim 1, wherein the burnt dolomite is dolomite ore which is calcined at a temperature of at least 800^{o}C.

3. A method of producing hydrogen gas as claimed in claim 2, wherein the burnt dolomite is dolomite ore which is calcined at a temperature of approximately 1200^{o}C.

4. A method of producing hydrogen gas as claimed in claim 1, wherein aluminum is mixed with burnt dolomite in water.

5. A method of producing hydrogen gas as claimed in claim 1, wherein water is poured into a mixture of burnt dolomite powder and aluminum powder.

6. A composition comprising burnt dolomite and aluminum.

7. A composition according to claim 6, wherein said burnt dolomite is dolomite ore which is calcined at a temperature of at least 800^{o}C.

8. The composition of claim 7, wherein said burnt dolomite is dolomite ore which is calcined at a temperature of about 1200^{o}C.

9. The composition of claim 6, wherein said burnt dolomite and aluminum are powders.

## Patentansprüche

1. Verfahren zur Erzeugung von Wasserstoffgas, dadurch **gekennzeichnet**, daß
gebrannter Dolomit, Aluminium und Wasser vermischt werden.

2. Verfahren zur Erzeugung von Wasserstoffgas nach Anspruch 1,
worin der gebrannte Dolomit Dolomiterz ist, das bei einer Temperatur von wenigstens 800°C kalziniert wird.

3. Verfahren zur Erzeugung von Wasserstoffgas nach Anspruch 2,
worin der gebrannte Dolomit Dolomiterz ist, das bei einer Temperatur von annähernd 1200°C kalziniert ist.

4. Verfahren zur Erzeugung von Wasserstoffgas nach Anspruch 1,
worin Aluminium mit gebranntem Dolomit in Wasser vermischt wird.

5. Verfahren zur Erzeugung von Wasserstoffgas nach Anspruch 1,
worin Wasser in eine Mischung aus gebranntem Dolomitpulver und Aluminiumpulver gegossen wird.

6. Zusammensetzung, umfassend gebrannten Dolomit und Aluminium.

7. Zusammensetzung nach Anspruch 6, worin der gebrannte Dolomit Dolomiterz ist, das bei einer Temperatur von wenigstens 800°C kalziniertist.

8. Zusammensetzung nach Anspruch 7, worin der gebrannte Dolomit Dolomiterz ist, das bei einer Temperatur von etwa 1200°C kalziniert wird.

9. Zusammensetzung nach Anspruch 6, worin der gebrannte Dolomit und Aluminium Pulver sind.

## Revendications

1. Procédé de production d'hydrogène à l'état gazeux caractérisé en ce qu'on mélange de la dolomite calcinée, de l'aluminium et de l'eau.

2. Procédé de production d'hydrogène à l'état gazeux selon la revendication 1, dans lequel la dolomite calcinée est un minerai de dolomite que l'on a calciné à une température d'au moins 800°C.

3. Procédé de production d'hydrogène à l'état gazeux selon la revendication 2, dans lequel la dolomite calcinée est un minerai de dolomite que l'on a calciné à une température d'approximativement 1200°C.

4. Procédé de production d'hydrogène à l'état gazeux selon la revendication 1, dans lequel on mélange l'aluminium à la dolomite calcinée dans de l'eau.

5. Procédé de production d'hydrogène à l'état gazeux selon la revendication 1, dans lequel on verse de l'eau dans un mélange de poudre de dolomite calcinée et de poudre d'aluminium.

6. Composition comprenant de la dolomite calcinée et de l'aluminium.

7. Composition selon la revendication 6, dans laquelle ladite dolomite calcinée est un minerai de dolomite que l'on a calciné à une température d'au moins 800°C.

8. Composition selon la revendication 7, dans laquelle ladite dolomite calcinée est un minerai de dolomite que l'on a calciné à une température d'environ 1200°C.

9. Composition selon la revendication 6, dans laquelle lesdits dolomite calcinée et aluminium sont des poudres.
